# FASCICULE DE BREVET EUROPEEN

(11) **EP 1 556 243 B1**
(45) Date de publication et mention de la délivrance du brevet: **21.02.2007**
(21) Numéro de dépôt: 03809356.3
(22) Date de dépôt: 10.10.2003
(51) Int. Cl.: B60N 2/22, B60N 2/23

(54) **DISPOSITIF DE VERROUILLAGE DE LA CONFIGURATION D'UN EQUIPEMENT TEL QU'UN SIEGE DE VEHICULE**
VORRICHTUNG ZUM VERRIEGELN DER KONFIGURATION EINER EINRICHTUNG,WIE ZUM BEISPIEL EINES FAHRZEUGSITZES
DEVICE FOR LOCKING THE CONFIGURATION OF AN EQUIPMENT SUCH AS A VEHICLE SEAT

(30) Priorité: 18.10.2002 FR 0212973
(43) Date de publication de la demande: 27.07.2005
(73) Titulaire: Cresystem, 36100 Issoudun (FR)
(72) Inventeur: WALIGORA, Julien, F-36100 Issoudun (FR); WALIGORA, Laurent, F-36100 Issoudun (FR)
(74) Mandataire: Collin, Jérôme
(86) Numéro de dépôt international: PCT/FR2003/002993
(87) Numéro de publication internationale: WO 2004/037601

(56) Documents cités:
- US-A- 3 127 788
- US-A- 3 350 135
- US-A- 3 398 986
- US-A- 3 479 890

## Description

L'invention concerne les dispositifs de verrouillage de la configuration d'un équipement tel qu'un siège de véhicule.

On connaît du document US-3 398 986 un tel dispositif qui permet de régler la position du dossier du siège d'un véhicule par rapport à l'assise. Le dispositif comprend un système vis-écrou réversible dont la vis est reliée à l'assise. Deux séries de plaques imbriquées sont aptes à être reliées respectivement à l'assise et au siège et sont serrés mutuellement par un ressort.

Pour incliner le dossier vers l'arrière, l'utilisateur actionne un organe de déverrouillage externe qui autorise la rotation de l'écrou d'un seul bloc avec tous les plaques. Lorsque la position souhaitée est atteinte, l'utilisateur relâche l'organe de déverrouillage, ce qui verrouille le dossier en position. Pour relever le dossier, l'utilisateur peut manoeuvrer directement ce dernier : cette action sollicite l'écrou à l'encontre du ressort, ce qui desserre les plaques. Les deux séries de plaques peuvent alors tourner l'une par rapport à l'autre. Une fois que la position souhaitée est atteinte, le ressort serre à nouveau les plaques, ce qui verrouille le dossier en position. Ce changement de position a donc été obtenu par la seule manoeuvre du dossier, sans action sur l'organe de déverrouillage.

L'utilisation d'un tel système à plaques de friction imbriquées a pour avantage de permettre un verrouillage efficace du dossier en position, au moyen d'une sollicitation relativement faible par le ressort.

Toutefois, le dispositif du document précité a pour inconvénient qu'il ne met en oeuvre le desserrage des plaques que lorsqu'on relève le dossier du siège. En effet, pour abaisser le dossier vers l'arrière, l'utilisateur doit impérativement manoeuvrer l'organe de déverrouillage externe comme on l'a mentionné. Les atouts du système à plaques sont donc sous exploités. Il s'ensuit de surcroît que l'ensemble du mécanisme est relativement complexe et encombrant Il nécessite en particulier de disposer l'organe de déverrouillage sur le côté, de sorte qu'il occupe un gros volume parfois incompatible avec l'espace disponible dans l'habitacle ou la cabine du véhicule.

Un but de l'invention est par conséquent de fournir un dispositif permettant de tirer un plus grand parti du système à éléments de friction, qui soit d'un agencement plus simple et soit moins encombrant.

En vue de la réalisation de ce but, on prévoit selon l'invention un dispositif de verrouillage de la configuration d'un équipement, tel qu'un siège, comportant un support et une partie mobile, le dispositif comprenant :
- au moins trois éléments mobiles les uns par rapport aux autres et reliés respectivement au support et à la partie mobile suivant une alternance spatiale ;
- des moyens de serrage des éléments pour interdire un mouvement de la partie mobile par rapport au support ; et
- un organe de déverrouillage pour autoriser le mouvement, l'organe de déverrouillage étant manoeuvrable indépendamment de la partie mobile, l'organe de déverrouillage étant agencé pour interrompre le serrage exercé par les moyens de serrage.

Ainsi, la manoeuvre de l'organe de déverrouillage permet d'interrompre le serrage des éléments pour mouvoir la partie mobile dans deux sens de déplacement au choix. On tire donc parti des avantages du système à éléments de friction lors des deux possibilités de mouvement. De plus, l'invention permet si nécessaire de loger l'organe de déverrouillage de façon co-axiale par rapport à l'axe principal du dispositif, voire dans cet axe de sorte que l'invention permet de donner au dispositif un encombrement réduit compatible avec l'espace disponible dans un habitacle ou une cabine de véhicule.

Le dispositif selon l'invention pourra également présenter au moins l'une quelconque des caractéristiques suivantes :
- il comporte une vis et un écrou formant un assemblage vis-écrou réversible, l'un parmi la vis et l'écrou étant solidaire en rotation d'au moins l'un des éléments, l'autre parmi la vis et l'écrou étant solidaire en rotation du support ;
- l'assemblage vis-écrou est interposé entre l'organe de déverrouillage et la partie mobile afin de transmettre des mouvements de l'un à l'autre ;
- l'organe de déverrouillage s'étend dans un axe principal du dispositif;
- il comprend un arbre auquel au moins un des éléments est solidaire en rotation, l'organe de déverrouillage s'étendant dans une cavité de l'arbre, coaxialement à l'arbre ;
- l'organe de déverrouillage fait saillie à une extrémité axiale de l'arbre ;
- il comprend un boîtier, au moins l'un des éléments mobiles étant solidaire à rotation du boîtier par complémentarité de forme avec le boîtier ;
- les éléments sont au moins au nombre de quatre, au moins deux des éléments étant reliés à la partie mobile et au moins deux autres des éléments étant reliés au support ;
- les éléments sont des plaques ;
- il comprend des moyens de rappel de la partie mobile agencés pour solliciter la partie mobile dans une direction prédéterminée ;
- les moyens de serrage comprennent un ressort ;
- l'équipement est un siège de véhicule, en particulier d'avion ; et
- la partie mobile est un dossier de siège.

D'autres caractéristiques et avantages de l'invention apparaîtront encore dans la description suivante d'un mode préféré de réalisation donné à titre d'exemple non limitatif en référence aux dessins annexés :
- La figure 1 est une vue partielle de côté d'un siège de véhicule incorporant un dispositif de verrouillage selon l' invention ;
- La figure 2 est un schéma en coupe axiale longitudinale du dispositif de verrouillage de la figure 1 montrant son principe de fonctionnement ;
- La figure 3 est une vue en coupe axiale longitudinale détaillée du dispositif de verrouillage de la figure 1 ; et
- les figures 4 et 5 sont des vues en élévation de deux types de plaques comprises dans le dispositif de la figure 3.

La présente invention concerne les dispositifs mécaniques permettant de verrouiller ou de déverrouiller la position d'une partie mobile d'un fauteuil ou d'un lit articulé. L'actionnement du dispositif se fait au moyen d'une commande de déblocage extérieure comme on va le voir.

L'invention trouve des applications dans tous les domaines utilisant un lit ou un siège dont les éléments peuvent être positionnés en fonction des besoins ou du confort de l'utilisateur. En particulier, elle s'applique aux sièges de véhicules tels que les avions, les bateaux ou les trains, qu'il s'agisse du siège du conducteur ou pilote, ou des sièges des passagers. L'invention s'applique également aux sièges d'habitation ainsi qu'aux lits tels que les lits médicaux. Elle s'applique encore aux meubles possédant des parties mobiles telles que des portes, des haillons etc. Plus généralement, l'invention peut s'appliquer dans tout autre domaine où l'on cherche à verrouiller un mouvement linéaire.

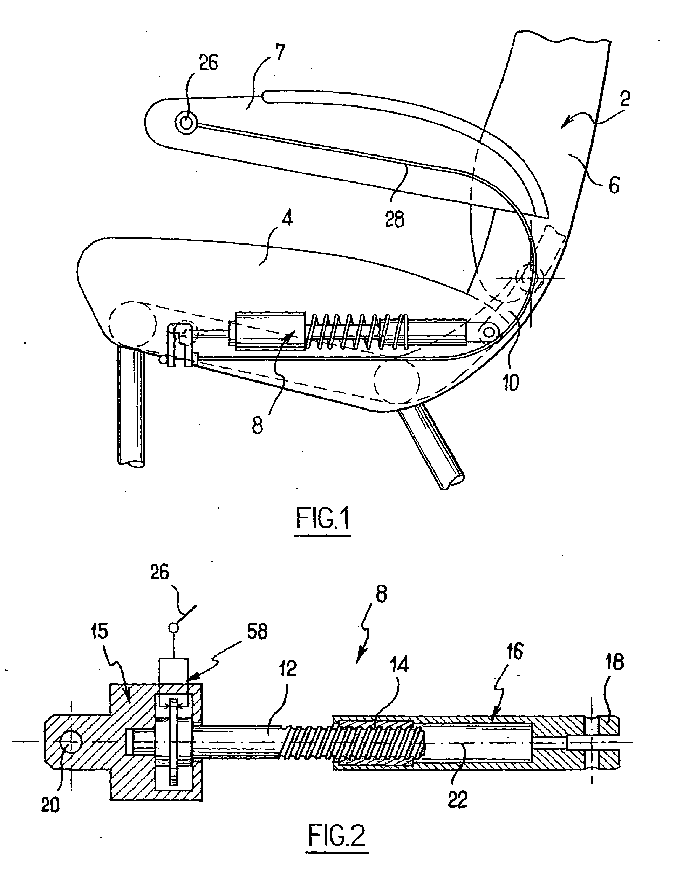

Dans le présent mode de réalisation, le siège 2 illustré à la figure 1 est un siège de passager pour avions. Le siège comporte une assise 4 ayant vocation à être fixée rigidement à un plancher du véhicule. Le siège comporte par ailleurs un dossier 6 mobile à rotation par rapport à l'assise 4 autour d'un axe horizontal et parallèle au plancher, perpendiculaire au plan de la feuille sur la figure 1. Grâce à cette articulation, le dossier 2 peut être incliné vers l'arrière d'une façon connue en elle-même. Le siège comprend enfin un accoudoir 7 relié à l'assise 4.

Le siège est pourvu d'un dispositif 8 selon l'invention permettant à l'utilisateur de verrouiller la position du dossier 6 par rapport au support 4. Le dispositif 8 est fixé par son extrémité avant, son extrémité gauche sur la figure 1, au support 4. Il est fixé par son extrémité arrière, à savoir son extrémité droite sur la figure 1, à une extrémité d'une biellette 10 articulée par une autre de ses extrémités au dossier 6 de façon à relier le mouvement du dossier au mouvement des parties mobiles du dispositif comme on va le voir. Par conséquent, lorsque le dispositif 8 verrouille la position du dossier 6, ce dernier ne peut pas quitter sa position. En revanche, lorsque le dispositif déverrouille la position, le dossier 6 peut être incliné vers l'avant ou vers l'arrière au gré du choix de l'utilisateur.

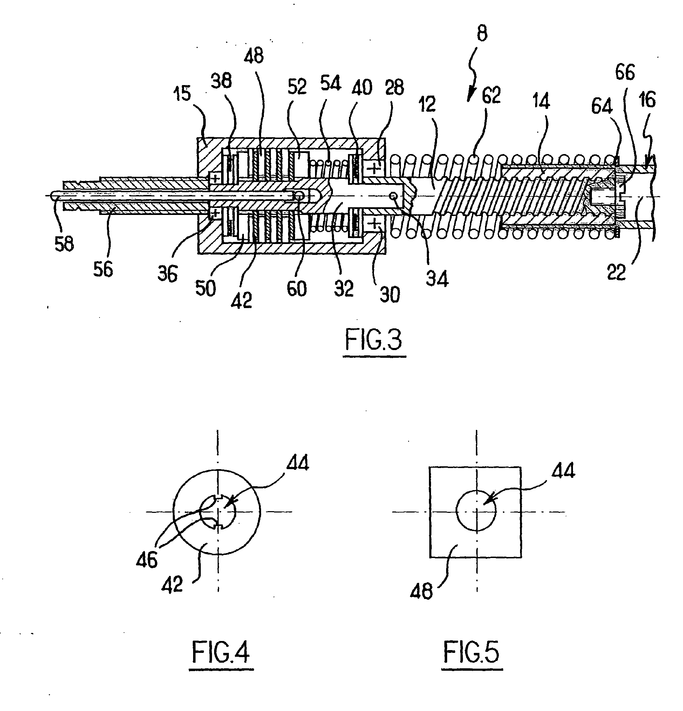

On a illustré à la figure 2 un schéma de principe du dispositif 8 qui sera décrit plus en détails à la figure 3. Le dispositif comporte une vis 12 formée par un arbre fileté sur sa moitié droite sur la figure 2. Il comporte également un écrou 14 formant avec la vis 12 un système vis-écrou réversible. L'écrou 14 est immobilisé en rotation par rapport à l'assise 4 et solidaire d'une pièce de liaison 16. Cette pièce est allongée et présente à son extrémité avant une cavité cylindrique recevant rigidement l'écrou 14 ainsi que la partie filetée de la vis 12 engagée dans l'écrou. L'extrémité arrière 18 de la pièce de liaison 16 est articulée par une chape à la biellette 10 précitée. Le dispositif comporte une deuxième pièce de liaison 15 recevant une extrémité avant de la vis 12. Cette extrémité est montée dans une cavité de la pièce de liaison 15 de façon à pouvoir tourner par rapport à celle-ci tout en étant immobilisée à translation par rapport à celle-ci. Ainsi tout mouvement axial de la vis 12 dans la pièce 15 est interdit. La deuxième pièce de liaison 15 est articulée de façon adaptée par son extrémité avant 20 à l'assise 4 autour d'un axe perpendiculaire au plan de la figure 2. La vis 12, l'écrou 14, et les deux pièces de liaison 15 et 16 sont coaxiales d'axe 22, cet axe constituant la direction longitudinale du dispositif.

Il résulte de cet agencement que la première pièce de liaison 16 ne peut avoir qu'un mouvement de translation par rapport à la deuxième pièce de liaison 15. En fonction d'une force d'exerçant suivant la direction axiale 22 sur la première pièce de liaison 16, et suivant le sens de cette force, la vis 12 va avoir tendance à se visser ou à se dévisser de l'écrou 14 entraînant ainsi la rotation de la vis 12 dans la deuxième pièce de liaison 15 et ainsi la translation de la première pièce de liaison 16 par rapport à la deuxième pièce de liaison 15.

Le dispositif est apte à immobiliser la vis 12 en rotation, interdisant ainsi la translation de la première pièce de liaison 16. Le dispositif comprend un organe de déverrouillage 58, commandé par exemple au moyen d'un bouton de commande 26 situé dans l'accoudoir 7 et pouvant être actionné par l'occupant du siège. Sans action de l'utilisateur sur le bouton 26, l'organe de déverrouillage 58 immobilise la vis 12 qui ainsi ne peut pas progresser dans l'écrou 14. Le mouvement de la première pièce de liaison 16 et du dossier 6. est par conséquent interdit.

L'action de l'occupant sur le bouton 26 est transmise au moyen d'un câble 28 s'étendant dans l'accoudoir 7 à l'organe de déverrouillage 58 immobilisant la vis 12 afin de faire cesser cette immobilisation. Lorsque l'utilisateur actionne le bouton 26, l'organe de déverrouillage 58 libère la rotation de la vis 12 qui est donc libre de progresser dans l'écrou dans un sens ou dans l'autre. L'utilisateur peut donc incliner à son souhait le dossier 6. Comme on le verra plus loin, ce mouvement peut également se produire simplement sous l'effet d'un ressort de rappel.

Le relâchement du bouton 26 verrouille à nouveau la position du dossier 6 en immobilisant la vis 12 en rotation. Au moment où l'utilisateur relâche le bouton 26, l'organe 58 bloque à nouveau la rotation de la vis 12, ce qui fige en position la pièce de liaison 16 ainsi que le dossier 6.

On va maintenant décrire en plus grands détails et en référence aux figures 3 à 5 la constitution du dispositif 8.

Le dispositif de verrouillage 8 comporte un boîtier 15 ayant une forme de parallélépipède rectangle et présentant une cavité interne ayant une forme similaire. Le boîtier présente un orifice axial arrière 28 occupé par un palier 30. Une extrémité avant de la vis 12 est logée dans ce palier. Le dispositif comporte un arbre 32 d'axe 22 présentant une extrémité arrière logée dans une cavité avant de la vis 12 et immobilisée dans cette dernière au moyen d'une goupille 34 s'étendant perpendiculairement à l'axe 22 en interceptant cet axe. Par conséquent, la vis 12 et l'arbre 32 sont rigidement solidaires l'un de l'autre.

L'arbre 32 s'étend suivant l'axe 22 à travers le boîtier 15 de sorte que son extrémité avant occupe un orifice avant du boîtier avec interposition d'un palier 36. L'arbre 32 présente au voisinage de ses deux extrémités un diamètre externe réduit par rapport au diamètre d'une portion médiane de l'arbre. Le dispositif comporte deux butées 38 et 40 de forme circulaire, présentant chacune un orifice en leur centre, et enfilées respectivement sur les portions d'extrémité avant et arrière de l'arbre 32. Chaque butée est donc en butée sur un épaulement respectif délimitant la portion médiane de l'arbre 32 et contre une face d'extrémité axiale respective du boîtier 15. Grâce à cet assemblage, l'arbre 32 et la vis 12 sont mobiles à rotation par rapport au boîtier 15 autour de l'axe 22 mais sont immobilisés en translation par rapport à ce boîtier.

On pourra prévoir que les paliers 30 et 36 ainsi que les butées 38 et 40 sont lisses, ou bien en matériau fritté, ou bien formées par des roulements à billes, à aiguilles, etc.

Le dispositif 8 comprend deux séries de plaques de friction illustrées aux figures 3 à 5. Les plaques 42 de la première série, illustrées à la figure 4, ont une forme de disque présentant un orifice circulaire 44 en leur centre. Ces plaques sont au nombre de quatre dans le présent exemple. Toutefois, ce nombre pourrait être augmenté ou réduit. Chaque plaque 42 présente deux reliefs 46 s'étendant radialement en saillie dans l'orifice 44 à partir d'un bord de cet orifice. Chaque relief a une forme générale rectangulaire et s'étend dans le plan de la plaque. L'arbre 32 présente deux gorges longitudinales rectilignes s'étendant parallèlement à l'axe 22 sur la face externe de l'arbre en étant diamétralement opposées l'une à l'autre de part et d'autre de cet axe. Ces gorges sont aptes à recevoir respectivement les reliefs 46 lorsque les plaques 42 sont enfilées sur l'arbre 32. Dans cette position, chaque plaque s'étend dans un plan perpendiculaire à l'axe 22, les plaques étant parallèles les unes aux autres. Grâce à cet agencement, les plaques 42 sont mobiles en translation le long de l'arbre 32 et à l'intérieur du boîtier 15. En revanche, elles sont solidaires en rotation de l'arbre 32. Elles accompagnent donc ce dernier au cours de son mouvement lorsqu'il tourne à l'intérieur du boîtier 15.

Les plaques 48 de la deuxième série, illustrées à la figure 4, ont une forme générale rectangulaire, plus précisément carrée dans le présent exemple. Elles présentent chacune un orifice circulaire 44 en leur centre. La forme du contour extérieur de ces plaques correspond à la forme de la cavité du boîtier 15 dans un plan perpendiculaire à l'axe 22. Les plaques 48 peuvent donc être reçues dans le boîtier 15 en étant enfilées sur l'arbre 32 et en s'étendant parallèlement les unes aux autres et perpendiculairement à l'axe 22. Grâce à la forme complémentaire des plaques 48 et de la cavité du boîtier 15, les plaques sont immobilisées en rotation par rapport au boîtier autour de l'axe 22 par complémentarité ou coopération de forme, mais sont libres de coulisser le long de cet axe. Les plaques 48 de la deuxième série sont elles aussi au nombre de quatre mais ce nombre lui aussi pourrait varier notamment en correspondance avec le nombre des plaques de la première série.

Les plaques 42, 48 des deux séries sont alternées spatialement c' est-à-dire le long de l'axe 22 de sorte que toutes les plaques sont parallèles les unes aux autres et perpendiculaires à l'axe 22. Les plaques des deux séries sont en contact les unes avec les autres en réalisant des contacts surfaciques.

Naturellement on pourra prévoir des moyens variés pour immobiliser à rotation les plaques de la première série par rapport à l'arbre et les plaques de la deuxième série par rapport au boîtier. Il pourra s'agir en particulier de cannelures, de rainures, de méplats ou de tout autre forme permettant cette immobilisation en rotation mais autorisant un déplacement relatif suivant l'axe 22.

Le dispositif comprend également deux bagues 50 et 52 enfilées chacune sur l'arbre 32 et interposées respectivement entre la butée avant 38 et la première des plaques 42, et la dernière des plaques 48 et la butée arrière 40.

Le dispositif comprend un ressort de rappel 54 interposé axialement entre la bague arrière 52 et la butée arrière 40 en prenant appui sur celles-ci par ses extrémités. Ce ressort 54 presse les plaques 42, 48 des deux séries les unes contre les autres de façon à les serrer lorsque l'organe de déverrouillage 58 n'est pas actionné. Dans ces conditions, au repos, le couple de frottement entre les plaques s'oppose à la rotation de l'arbre 32 et de la vis par rapport au boîtier 15, immobilisant ainsi le dossier 6 en position.

Le boîtier 15 est prolongé vers l'avant à partir de son orifice par un bras 56 par exemple rigidement fixé dans cet orifice au moyen d'une liaison vis-écrou. L'organe de déverrouillage comprend un poussoir 58 comportant une tige s'étendant à l'intérieur du bras 56, dans une cavité de celui-ci, coaxialement au bras et suivant l'axe 22. Une goupille 60 s'étendant transversalement à l'axe 22 en interceptant celui-ci s'étend dans une lumière de l'arbre 32 en traversant deux orifices radiaux de la bague arrière 52. Une extrémité arrière du poussoir 58 vient en appui sur cette goupille, une extrémité avant du poussoir faisant par ailleurs saillie à l'extrémité avant du bras 56. Le poussoir 58 peut coulisser suivant l'axe 22 par rapport au bras 56 afin de solliciter la goupille 60 vers l'arrière. Le coulissement vers l'arrière du poussoir 58 est obtenu par l'utilisateur au moyen de l'actionnement du bouton 26 grâce au câble 28 et selon un agencement connu en lui-même qui ne sera pas décrit ici en détails.

Tant que le poussoir 58 n'est pas actionné, le ressort 54 presse les deux séries de plaques les unes contre les autres de sorte que le couple de frottement généré empêche la rotation des plaques 42 de la première série et de la vis 12. Le dispositif 8 bloque alors tout mouvement du dossier 6 du fauteuil qui se trouve ainsi verrouillé dans sa position.

Lorsque l'utilisateur appuie sur le bouton 26, le recul du poussoir 58 pousse la bague arrière 52 vers l'arrière, ce qui a pour effet de comprimer le ressort 54 et de relâcher sa pression sur les deux séries de plaques. Le couple de frottement entre les plaques diminue alors fortement et ne s'oppose plus à la rotation de la vis 12 qui peut ainsi progresser dans l'écrou 14. L'utilisateur peut alors déplacer le dossier 6, par exemple au moyen de son dos, jusqu'à la position souhaitée vers l'avant ou vers l'arrière, cette position étant quelconque.

Lorsque l'utilisateur relâche le bouton 26, le ressort 54 rappelle vers l'avant l'ensemble de l'équipage constitué par la bague arrière 52 et le poussoir 58 et resserre les plaques. La vis se trouve alors à nouveau immobilisée en position ainsi que le dossier 6.

On remarquera que le déverrouillage du dispositif peut être réalisé sous charge et quelle que soit la valeur de cette charge. La course du poussoir 58 peut être très réduite car il suffit d'annuler la pression du ressort 54 pour permettre la rotation relative des plaques sans nécessairement les décoller tout à fait.

Le dispositif comporte un autre ressort de rappel 62 interposé axialement entre la face d'extrémité arrière du boîtier 15 et un anneau élastique 64 inséré dans une gorge annulaire externe ménagée sur la première pièce de liaison 16, et prenant appui axialement sur ceux-ci. Le ressort exerce donc une force tendant à éloigner la première pièce de liaison 16 à l'égard de la deuxième pièce de liaison 15. Ce ressort sera prévu pour avoir une raideur suffisant à repousser le dossier 6 jusqu'à sa position de fin de course, par exemple sa position la plus relevée, lorsque l'utilisateur déverrouille le dispositif sans plus s'appuyer sur le dossier ou en s'appuyant modérément sur celui-ci. Ce ressort de rappel permet au dossier de toujours accompagner le dos de l'utilisateur lorsqu'il veut le relever en actionnant le bouton 26 et ainsi limiter ses efforts.

Dans le présent exemple, une extrémité arrière de la vis 12 présente un taraudage recevant une vis 66 dont le diamètre de la tête est supérieur au diamètre hors tout de la partie arrière de la vis 12 pour permettre à la vis 66 de prendre appui axialement sur l'extrémité arrière de l'écrou 14. La vis 66 constitue une vis de butée qui fixe la position de fin de course du dossier 6. Cette position est déterminée en particulier par la longueur de la partie filetée de la vis 12.

Les plaques 42 et 48 pourront être formées de matériaux divers assurant un coefficient de frottement maximal, à usure réduite et n'ayant pas de tendance au collage. Leur nombre dépendra du couple de freinage souhaité.

On remarquera que le dispositif selon l'invention permet le verrouillage du dossier 6 dans une infinité de positions et dans une position quelconque entre les deux extrémités de la course du dossier..

Bien entendu, on pourra apporter à l'invention de nombreuses modifications sans sortir du cadre de celle-ci défini par les revendications annexées. On pourra prévoir que la vis 12 est une vis à billes. Dans une variante de réalisation, les éléments 42 et 48 pourront avoir une forme non plane, par exemple une forme ondulée.

## Revendications

1. Dispositif de verrouillage de la configuration d'un équipement, tel qu'un siège (2), comportant un support (4) et une partie mobile (6), le dispositif comprenant:
- au moins trois éléments (42, 48) mobiles les uns par rapport aux autres et reliés respectivement au support (4) et à la partie mobile (6) suivant une alternance spatiale ;
- des moyens (54) de serrage des éléments (42, 48) pour interdire un mouvement de la partie mobile par rapport au support ; et
- un organe de déverrouillage (58) pour autoriser le mouvement, l'organe de déverrouillage étant manoeuvrable indépendamment de la partie mobile (6),
**caractérisé en ce que** l'organe de déverrouillage (58) est agencé pour interrompre le serrage exercé par les moyens de serrage (54).

2. Dispositif selon la revendication 1, **caractérisé en ce qu'**il comporte une vis (12) et un écrou (14) formant un assemblage vis-écrou réversible, l'un (12) parmi la vis et l'écrou étant solidaire en rotation d'au moins l'un (42) des éléments, l'autre (14) parmi la vis et l'écrou étant solidaire en rotation du support (4).

3. Dispositif selon la revendication 2 **caractérisé en ce que** l'assemblage vis-écrou est interposé entre l'organe de déverrouillage (58) et la partie mobile (6) afin de transmettre des mouvements de l'un à l'autre.

4. Dispositif selon l'une quelconque des revendications précédentes, **caractérisé en ce que** l'organe de déverrouillage (58) s'étend dans un axe principal (22) du dispositif (24).

5. Dispositif selon l'une quelconque des revendications précédentes, **caractérisé en ce qu'**il comprend un arbre (32) auquel au moins un (42) des éléments est solidaire en rotation, l'organe de déverrouillage (58) s'étendant dans une cavité de l'arbre, coaxialement à l'arbre.

6. Dispositif selon la revendication 5 **caractérisé en ce que** l'organe de déverrouillage (58) fait saillie à une extrémité axiale de l'arbre (32).

7. Dispositif selon l'une quelconque des revendications précédentes **caractérisé en ce qu'**il comprend un boîtier (15), au moins l'un (48) des éléments mobiles étant solidaire à rotation du boîtier par complémentarité de forme avec le boîtier.

8. Dispositif selon l'une quelconque des revendications précédentes **caractérisé en ce que** les éléments (42, 48) sont au moins au nombre de quatre, au moins deux (42) des éléments étant reliés à la partie mobile (6) et au moins deux autres (48) des éléments étant reliés au support (4).

9. Dispositif selon l'une quelconque des revendications précédentes **caractérisé en ce que** les éléments (42, 48) sont des plaques.

10. Dispositif selon l'une quelconque des revendications précédentes **caractérisé en ce qu'**il comprend des moyens de rappel (62) de la partie mobile (6) agencés pour solliciter la partie mobile dans une direction prédéterminée.

11. Dispositif selon l'une quelconque des revendications précédentes **caractérisé en ce que** les moyens de serrage (54) comprennent un ressort.

12. Dispositif selon l'une quelconque des revendications précédentes **caractérisé en ce que** l'équipement est un siège (2) de véhicule, en particulier d'avion.

13. Dispositif selon l'une quelconque des revendications précédentes **caractérisé en ce que** la partie mobile (6) est un dossier de siège.

## Claims

1. Device for locking the configuration of equipment, such as a seat (2), having a support (4) and a moving part (6), the device comprising:
- at least three elements (42, 48) movable with respect to each other and connected respectively to the support (4) and to the moving part (6) with spatial alternation;
- means (54) for clamping elements (42, 48) to prevent a movement of the moving part with respect to the support; and
- an unlocking member (58) to allow movement, the unlocking member being operable independently of the moving part, **characterized in that** the unlocking member (58) is arranged to cancel the clamping provided by the clamping means (54).

2. Device according to Claim 1, **characterized in that** it comprises a screw (12) and a nut (14) forming a reversible screw and nut assembly, one member (12) of the screw and nut assembly being fixed with respect to rotation to at least one (42) of the elements, while the other member (14) of the screw and nut assembly is fixed with respect to rotation to the support (4).

3. Device according to Claim 2, **characterized in that** the screw and nut assembly is interposed between the unlocking member (58) and the moving part (6) in order to transmit movements from one to the other.

4. Device according to any one of the preceding claims, **characterized in that** the unlocking member (58) extends in a main axis (22) of the device (24).

5. Device according to any one of the preceding claims, **characterized in that** it comprises a shaft (32) to which at least one (42) of the elements is fixed with respect to rotation, the unlocking member (58) extending in a cavity of the shaft, coaxially with the shaft.

6. Device according to Claim 5, **characterized in that** the unlocking member (58) projects at an axial end of the shaft (32).

7. Device according to any one of the preceding claims, **characterized in that** it comprises a casing (15), at least one (48) of the moving elements being fixed with respect to rotation to the casing by having a shape complementary to that of the casing.

8. Device according to any one of the preceding claims, **characterized in that** there are at least four elements (42, 48), at least two (42) of the elements being connected to the moving part (6) and at least two other ones (48) of the elements being connected to the support (4) .

9. Device according to any one of the preceding claims, **characterized in that** the elements (42, 48) are plates.

10. Device according to any one of the preceding claims, **characterized in that** it comprises means (62) for returning the moving part (6), arranged for pushing the moving part in a predetermined direction.

11. Device according to any one of the preceding claims, **characterized in that** the clamping means (54) comprise a spring.

12. Device according to any one of the preceding claims, **characterized in that** the equipment is a vehicle seat (2), particularly an aircraft seat.

13. Device according to any one of the preceding claims, **characterized in that** the moving part (6) is a seat back.

## Patentansprüche

1. Vorrichtung zum Verriegeln der Konfiguration einer Einrichtung, wie beispielsweise eines Sitzes (2), die einen Träger (4) und einen beweglichen Teil (6) umfaßt, wobei die Vorrichtung folgendes umfaßt:
- wenigstens drei Elemente (42, 48), die gegeneinander beweglich sind und die gemäß einer räumlichen Wechselfolge mit dem Träger (4) bzw. mit dem beweglichen Teil (6) verbunden sind;
- Mittel (54) zum Feststellen der Elemente (42, 28), um eine Bewegung des beweglichen Teils gegenüber dem Träger zu verhindern; und
- ein Entriegelungselement (58) zum Zulassen der Bewegung, wobei das Entriegelungselement unabhängig vom beweglichen Teil (6) bedienbar ist, **dadurch gekennzeichnet, daß** das Entriegelungselement (58) dafür eingerichtet ist, die durch die Feststellmittel (54) ausgeübte Feststellung zu unterbrechen.

2. Vorrichtung nach Anspruch 1, **dadurch gekennzeichnet, daß** sie eine Schraube (12) und eine Mutter (14) umfaßt, die eine reversible Schrauben-Mutter-Anordnung bilden, wobei von der Schraube und der Mutter ein Teil (12) mit wenigstens einem (42) der Elemente drehfest verbunden ist und von der Schraube und der Mutter das andere Teil (14) drehfest mit dem Träger (4) verbunden ist.

3. Vorrichtung nach Anspruch 2, **dadurch gekennzeichnet, daß** die Schrauben-Mutter-Anordnung zwischen das Entriegelungselement (58) und den beweglichen Teil (6) geschaltet ist, um Bewegungen vom einen zum anderen zu übertragen.

4. Vorrichtung nach einem der vorhergehenden. Ansprüche, **dadurch gekennzeichnet, daß** das Entriegelungselement (58) sich in einer Hauptachse (22) der Vorrichtung (24) erstreckt.

5. Vorrichtung nach einem der vorhergehenden Ansprüche, **dadurch gekennzeichnet, daß** sie eine Welle (32) umfaßt, mit der wenigstens eines (42) der Elemente drehfest verbunden ist; wobei das Entriegelungselement (58) sich koaxial zur Welle in einer Aushöhlung der Welle erstreckt.

6. Vorrichtung nach Anspruch 5, **dadurch gekennzeichnet, daß** das Entriegelungselement (58) aus einem axialen Ende der Welle (32) hervorsteht.

7. Vorrichtung nach einem der vorhergehenden Ansprüche, **dadurch gekennzeichnet, daß** sie ein Gehäuse (15) umfaßt, wobei wenigstens eines (48) der beweglichen Elemente durch eine Formkomplementarität mit dem Gehäuse drehfest mit dem Gehäuse-verbunden ist.

8. Vorrichtung nach einem der vorhergehenden Ansprüche, **dadurch gekennzeichnet, daß** die Elemente (42, 48) wenigstens in einer Anzahl von vier vorliegen, wobei wenigstens zwei (42) der Elemente mit dem beweglichen Teil (6) verbunden sind und wenigstens zwei andere (48) der Elemente mit dem Träger (4) verbunden sind.

9. Vorrichtung nach einem der vorhergehenden Ansprüche, **dadurch gekennzeichnet, daß** die Elemente (42, 48) Platten sind.

10. Vorrichtung nach einem der vorhergehenden Ansprüche, **dadurch gekennzeichnet, daß** sie Mittel zum Zurückholen (62) des beweglichen Teils (6) umfaßt, die dafür eingerichtet sind den beweglichen Teil in eine vorbestimmte Richtung zu bewegen.

11. Vorrichtung nach einem der vorhergehenden Ansprüche, **dadurch gekennzeichnet, daß** die Feststellmittel (54) eine Feder umfassen.

12. Vorrichtung nach einem der vorhergehenden Ansprüche, **dadurch gekennzeichnet, daß** die Einrichtung ein Sitz (2) eines Fahrzeuges, insbesondere eines Flugzeugs, ist.

13. Vorrichtung nach einem der vorhergehenden Ansprüche, **dadurch gekennzeichnet, daß** der bewegliche Teil (6) eine Sitzrückenlehne ist.
